# EUROPEAN PATENT APPLICATION

(11) **EP 4 207 046 A1**
(43) Date of publication of application: **05.07.2023**
(21) Application number: 20952830.6
(22) Date of filing: 11.09.2020
(51) Int. Cl.: G06Q 50/30

(54) **DATA STORAGE METHOD AND APPARATUS, AND SYSTEM**

(71) Applicant: Huawei Technologies Co., Ltd., Shenzhen, Guangdong 518129 (CN)
(72) Inventor: GUO, Zhipeng, Shenzhen, Guangdong 518129 (CN); PENG, Jianfen, Shenzhen, Guangdong 518129 (CN)
(74) Representative: Maiwald GmbH
(86) International application number: PCT/CN2020/114808
(87) International publication number: WO 2022/052042

(57) **Abstract**

This application provides a data storage method and apparatus, and a system. The method may include: A first device in a vehicle obtains data related to the vehicle. The first device packs raw data, compressed data, or a digest of the raw data into a block, where the block is a block in a blockchain. The first device publishes the block to one or more second devices. The one or more second devices store the block, and update a locally stored blockchain. In this way, data backup can be implemented without a connection to an external network. In addition, distributed storage of data (or event log records in a vehicle) based on a blockchain can further improve security. In addition, this application may be further used in the vehicle field, for example, an intelligent networked vehicle or a smart vehicle. This application may be further used in the in-vehicle networking field, for example, an in-vehicle Ethernet or a local area network in vehicle.

## Description

### TECHNICAL FIELD

This application relates to the in-vehicle networking field, and more specifically, to a data storage method and apparatus, and a system.

### BACKGROUND

Nowadays, intelligentization, networking, electrification, and sharing have become development trends in the vehicle field. Generally, an event data recorder is installed on a vehicle. The event data recorder can record a driving speed, time, mileage, surrounding environment images, and other driving status information of the vehicle, and store the information locally. The information recorded by the event data recorder can be used as important evidence and records for accident analysis, accountability, and insurance evidence collection. Therefore, data integrity needs to be protected to prevent record data from being tampered with or lost.

In an existing solution, an event data recorder generally uploads data to a cloud by using the Internet of Vehicles while storing the data. This solution has a high requirement on the Internet of Vehicles. A vehicle needs to be connected to a network in real time, which also consumes a large amount of network traffic of the vehicle. If the vehicle moves to an underground garage or tunnel where the network is disconnected, data backup may fail.

### SUMMARY

This application provides a data storage method and apparatus, and a system, so as to implement data backup without a connection to an external network.

According to a first aspect, a data storage method is provided. The method may be performed by a device (for example, an entire system), or may be performed by a chip, a chip system, or a circuit disposed in the device. This is not limited in this application.

The method may include: receiving, through in-vehicle networking of a vehicle, a block that is generated based on data related to the vehicle and that is published by a first device; performing validity verification on the block published by the first device; and after the validity verification succeeds, storing the block published by the first device, and updating a locally stored blockchain.

For example, the data related to the vehicle may include but is not limited to one or more of the following event log records: vehicle status information (such as a driving state, a charging state, and a stop state), vehicle control records in some events (such as a driving speed and braking and steering operation records in a period of time before an accident occurs), network security event information (such as an intrusion detection record), and the like.

Generating a block based on the data related to the vehicle indicates that a block in a blockchain is generated based on the data related to the vehicle, or the data related to the vehicle (such as raw data, compressed data obtained after compression, or a digest of raw data) is packed into a block. The block is a block in the blockchain.

Based on the foregoing technical solution, the data related to the vehicle may be stored in a distributed manner based on a blockchain. That is, the data related to the vehicle is maintained in a plurality of devices in the vehicle in a blockchain manner, or is stored in a plurality of devices in the vehicle in a distributed manner. In this way, data backup can be implemented without a connection to an external network. In addition, distributed storage of data (or event log records in a vehicle) based on a blockchain can further improve security.

With reference to the first aspect, in some implementations of the first aspect, the method further includes: obtaining a symmetric key, where the symmetric key can be used to complete block generation and verification.

Based on the foregoing technical solution, a device participating in distributed storage may obtain a symmetric key, and the symmetric key may be used in subsequent steps such as blockchain generation and verification. In this manner, not only the data related to the vehicle can be stored in a distributed manner in a blockchain manner, but also a requirement for a device (that is, a node device in a blockchain network system) participating in distributed storage can be reduced.

With reference to the first aspect, in some implementations of the first aspect, the symmetric key is a pre-configured symmetric key, or the symmetric key is a symmetric key negotiated with the first device.

Based on the foregoing technical solution, in an example, devices participating in distributed storage may negotiate a symmetric key. That is, a key in block generation and verification processes may be obtained through random negotiation, and may be changed through negotiation at any time, thereby improving security. In another example, the symmetric key may also be pre-configured, so that the symmetric key is easy to use.

With reference to the first aspect, in some implementations of the first aspect, the block published by the first device includes a hash value and a timestamp; and the performing validity verification on the block published by the first device includes: performing the validity verification by comparing a hash value obtained through calculation with the hash value in the block published by the first device.

With reference to the first aspect, in some implementations of the first aspect, the performing the validity verification by comparing a hash value obtained through calculation with the hash value in the block published by the first device includes: when the hash value obtained through calculation is inconsistent with the hash value in the block published by the first device, determining that the validity verification fails, and discarding the block published by the first device.

With reference to the first aspect, in some implementations of the first aspect, the performing the validity verification by comparing a hash value obtained through calculation with the hash value in the block published by the first device includes: before a block is generated or before a block is published, if the block published by the first device is received, and the hash value obtained through calculation is consistent with the hash value in the block published by the first device, determining that the validity verification succeeds, and storing the block published by the first device.

Based on the foregoing technical solution, the second device is used as an example. After receiving a block sent by another device (for example, the first device), the second device may have different block validity verification methods based on different states of the second device. For example, before the second device generates a block or before the second device publishes a block, if the block published by the first device is received, and a hash value obtained by the second device through calculation is consistent with the hash value in the block published by the first device, the second device determines that the validity verification succeeds, and stores the block published by the first device.

With reference to the first aspect, in some implementations of the first aspect, the performing the validity verification by comparing a hash value obtained through calculation with the hash value in the block published by the first device includes: after a block is published and before the published block is stored, if the block published by the first device is received, the hash value obtained through calculation is consistent with the hash value in the block published by the first device, and the timestamp in the block published by the first device is earlier than a timestamp in the published block, determining that the validity verification succeeds, and storing the block published by the first device.

Based on the foregoing technical solution, the second device is used as an example. After receiving a block sent by another device (for example, the first device), the second device may have different block validity verification methods based on different states of the second device. For example, after the second device publishes a block and before the block published by the second device is stored, if the block published by the first device is received, the hash value obtained by the second device through calculation is consistent with the hash value in the block published by the first device, and the timestamp in the block published by the first device is earlier than the timestamp in the block published by the second device, it is determined that the validity verification succeeds, and the second device stores the block published by the first device.

With reference to the first aspect, in some implementations of the first aspect, the performing the validity verification by comparing a hash value obtained through calculation with the hash value in the block published by the first device includes: after a block is published and before the published block is stored, if the block published by the first device is received, the hash value obtained through calculation is consistent with the hash value in the block published by the first device, and the timestamp in the block published by the first device is later than a timestamp in the published block, determining that the validity verification fails, and discarding the block published by the first device.

Based on the foregoing technical solution, the second device is used as an example. After receiving a block sent by another device (for example, the first device), the second device may have different block validity verification methods based on different states of the second device. For example, after the second device publishes a block and before the block published by the second device is stored, if the block published by the first device is received, the hash value obtained by the second device through calculation is consistent with the hash value in the block published by the first device, and the timestamp in the block published by the first device is later than the timestamp in the block published by the second device, it is determined that the validity verification fails, and the second device discards the block published by the first device.

With reference to the first aspect, in some implementations of the first aspect, the hash value obtained through calculation is obtained through calculation based on one or more of the following: the timestamp in the block published by the first device, the symmetric key with the first device, a hash value of the last block in the locally stored blockchain, data in the block published by the first device, and an identifier of the first device in the block published by the first device.

For example, the second device is used as an example. The second device may perform the validity verification on a block based on a symmetric key. For example, the second device calculates a hash value based on the symmetric key and another parameter (for example, the timestamp in the block published by the first device, the hash value of the last block in the blockchain locally stored in the second device, or the data in the block published by the first device).

Based on the foregoing technical solution, a smart contract is implemented based on the hash value and the timestamp in the block, to avoid using a digital signature mechanism and a proof-of-work mechanism.

With reference to the first aspect, in some implementations of the first aspect, the data related to the vehicle includes data of the vehicle that is collected by an event data recorder.

With reference to the first aspect, in some implementations of the first aspect, the first device is a vehicle integrated/integration unit VIU.

According to a second aspect, a data storage method is provided. The method may be performed by a device (for example, an entire system), or may be performed by a chip, a chip system, or a circuit disposed in the device. This is not limited in this application.

The method may include: obtaining data related to a vehicle; generating a block based on the data; and publishing the block to one or more second devices through in-vehicle networking of a vehicle.

Generating a block based on the data indicates that a block in a blockchain is generated based on the data, or data (such as raw data, compressed data, or a digest of raw data) is packed into a block. The block is a block in the blockchain.

Based on the foregoing technical solution, the data related to the vehicle may be stored in a distributed manner based on a blockchain. For example, after obtaining the data related to the vehicle, the first device may publish the data to another device (one or more second devices) in a manner of publishing a block. Therefore, the data related to the vehicle may be maintained in a plurality of devices in the vehicle in a blockchain manner, or may be stored in a plurality of devices in the vehicle in a distributed manner. In this way, data backup can be implemented without a connection to an external network.

With reference to the second aspect, in some implementations of the second aspect, the method further includes: obtaining a symmetric key, where the symmetric key can be used to complete block generation and verification.

With reference to the second aspect, in some implementations of the second aspect, the symmetric key is a pre-configured symmetric key, or the symmetric key is a symmetric key negotiated with the one or more second devices.

With reference to the second aspect, in some implementations of the second aspect, the generating a block based on the data includes one of the following: compressing the data, and generating the block based on the compressed data; or generating the block based on a digest of the data.

With reference to the second aspect, in some implementations of the second aspect, the block includes a hash value and a timestamp.

With reference to the second aspect, in some implementations of the second aspect, the obtaining data related to a vehicle includes: receiving the data of the vehicle that is collected by an event data recorder.

With reference to the second aspect, in some implementations of the second aspect, the second device is a vehicle integrated/integration unit VIU.

According to a third aspect, a data storage method is provided. The method may be performed by a device (for example, an entire system), or may be performed by a chip, a chip system, or a circuit disposed in the device. This is not limited in this application. The following mainly uses a device as an example for description.

The method may include: a first device obtains data related to a vehicle; the first device generates a block based on the data, and publishes the block to one or more second devices; and the one or more second devices store the block, and update a locally stored blockchain, where the first device communicates with the one or more second devices through in-vehicle networking of the vehicle.

Based on the foregoing technical solution, the data related to the vehicle may be stored in a distributed manner based on a blockchain. That is, the data related to the vehicle is maintained in a plurality of devices (for example, the first device and one or more second devices) in the vehicle in a blockchain manner, or is stored in a plurality of devices in the vehicle in a distributed manner. In this way, data backup can be implemented without a connection to an external network.

With reference to the third aspect, in some implementations of the third aspect, the first device is configured to perform the method according to any one of the second aspect or the possible implementations of the second aspect.

With reference to the third aspect, in some implementations of the third aspect, the second device is configured to perform the method according to any one of the first aspect or the possible implementations of the first aspect.

According to a fourth aspect, a device is provided, where the device is configured to perform the methods according to the first aspect to the third aspect. Specifically, the device may include modules configured to perform the methods according to the first aspect to the third aspect.

According to a fifth aspect, a data storage apparatus is provided, including a processor. The processor is coupled to a memory, and may be configured to execute instructions in the memory, to implement the method according to any one of the first aspect to the third aspect or the possible implementations of the first aspect to the third aspect. Optionally, the apparatus further includes the memory. Optionally, the apparatus further includes a communication interface, the processor is coupled to the communication interface, and the communication interface is configured to input and/or output information. The information includes at least one of instructions and data.

In an implementation, the apparatus is a device (for example, an entire system). When the apparatus is the device, the communication interface may be a transceiver or an input/output interface.

In another implementation, the apparatus is a chip or a chip system. When the apparatus is the chip or the chip system, the communication interface may be an input/output interface, or may be an input/output interface, an interface circuit, an output circuit, an input circuit, a pin, a related circuit, or the like on the chip or the chip system. The processor may alternatively be embodied as a processing circuit or a logic circuit.

In another implementation, the apparatus is a chip or a chip system disposed in a device.

Optionally, the transceiver may be a transceiver circuit. Optionally, the input/output interface may be an input/output circuit.

According to a sixth aspect, a computer-readable storage medium is provided. The computer-readable storage medium stores a computer program. When the computer program is executed by an apparatus, the apparatus is enabled to implement the method according to any one of the first aspect to the third aspect or the possible implementations of the first aspect to the third aspect.

According to a seventh aspect, a vehicle integrated/integration unit VIU is provided, where the VIU is configured to perform the methods according to the first aspect to the third aspect.

According to an eighth aspect, an apparatus is provided, including the first device and/or the second device described above.

According to a ninth aspect, a system is provided, including the first device and/or the second device described above.

With reference to the ninth aspect, in some implementations of the ninth aspect, the system is a vehicle, for example, a smart vehicle (smart/intelligent car).

### BRIEF DESCRIPTION OF DRAWINGS

FIG. 1 is a schematic diagram of a CCA architecture applicable to an embodiment of this application;
FIG. 2 is a schematic block diagram of a data storage method according to an embodiment of this application;
FIG. 3 is a schematic diagram of interconnection between four VIUs by using an Ethernet Eth applicable to an embodiment of this application;
FIG. 4 is a schematic diagram of negotiating a symmetric key by all VIUs participating in distributed storage applicable to an embodiment of this application;
FIG. 5 is a schematic flowchart of a data storage method according to an embodiment of this application;
FIG. 6 is a schematic diagram of a block structure applicable to an embodiment of this application;
FIG. 7 is a schematic flowchart of block generation applicable to an embodiment of this application;
FIG. 8 is a schematic flowchart of a data storage method according to another embodiment of this application;
FIG. 9 is a schematic flowchart of a data storage method according to still another embodiment of this application;
FIG. 10 is a schematic diagram of a block structure applicable to still another embodiment of this application;
FIG. 11 is a schematic flowchart of a data storage method according to still another embodiment of this application;
FIG. 12 is a schematic diagram of a block structure applicable to still another embodiment of this application;
FIG. 13 is a schematic block diagram of a first device according to an embodiment of this application;
FIG. 14 is a schematic block diagram of a second device according to an embodiment of this application;
FIG. 15 is a schematic diagram of a structure of a data storage apparatus according to an embodiment of this application; and
FIG. 16 is another schematic diagram of a structure of a data storage apparatus according to an embodiment of this application.

### DESCRIPTION OF EMBODIMENTS

The following describes technical solutions of this application with reference to accompanying drawings.

Nowadays, intelligentization, networking, electrification, and sharing have become development trends in the vehicle field. The development trends are usually implemented based on a system for implementing an electronic control function of a vehicle. At present, the system that implements an electronic control function in a vehicle mainly includes many types of electronic control components: domain controllers (domain controller, DC) and electronic control units (electronic control unit, ECU).

The DC is configured to control a plurality of vehicle parts in a functional domain. Generally, functions based on vehicle parts may be classified into a powertrain domain controller, a vehicle security domain controller, a vehicle body domain controller, an intelligent cockpit domain controller, an intelligent driving domain controller, and the like. That is, each DC may be configured to manage a functional domain in the vehicle, that is, there is a communication connection between the DC and a plurality of vehicle parts located in the functional domain. The DC is configured to control vehicle parts in a corresponding functional domain, or provide a data processing function for vehicle parts in a corresponding functional domain.

The ECU, as a component located inside the vehicle, has an electronic control function. For example, the ECU may control vehicle parts based on control information. For another example, the ECU may perform data processing on to-be-transmitted data in the vehicle parts.

Generally, one DC may be configured to control ECUs related to a plurality of functions in a functional domain, and may be further configured to be responsible for communication between different functional domains. An ECU in a functional domain may be configured to be responsible for more specific functions. In some scenarios, if there is a communication requirement, ECUs in different functional domains may also communicate with each other. For example, the ECUs may directly communicate with each other, or convert and forward communication packets by using a DC.

To adapt to the development trends in the vehicle field, a vehicle needs to implement more functions, and there are more electronic control components, especially ECUs located in the vehicle parts, in the system for implementing an electronic control function in the vehicle. To adapt to the trends of intelligentization and networking of a vehicle and reduce a length of a harness, an electronic and electrical architecture of the vehicle is gradually transformed from a central gateway to a distributed central computing architecture (central computing architecture, CCA). In the CCA architecture, electronic components and electronic devices of a vehicle are distributed in a plurality of areas; and a vehicle integrated/integration unit (vehicle integrated/integration unit, VIU), also known as a vehicle integrated/integration unit, is deployed in each area to manage ECUs in the area. The VIU may have one or more of the following functions: an electronic control function, a function the same as that of a gateway, and a function of processing data across vehicle parts. For example, the VIU has an electronic control function, that is, the VIU is configured to implement the electronic control functions provided by some or all of the ECUs inside the foregoing vehicle parts. For example, the VIU has a control function required by a vehicle part. For another example, the VIU has a data processing function required by a vehicle part. In another example, the VIU has a function the same as that of a gateway, that is, the VIU may further have some or all functions the same as those of the gateway, for example, a protocol conversion function, protocol encapsulation and forwarding functions, and a data format conversion function. In still another example, the VIU has a function of processing data across automotive parts, that is, performing processing, computation, and the like on data obtained from actuators of a plurality of automotive parts.

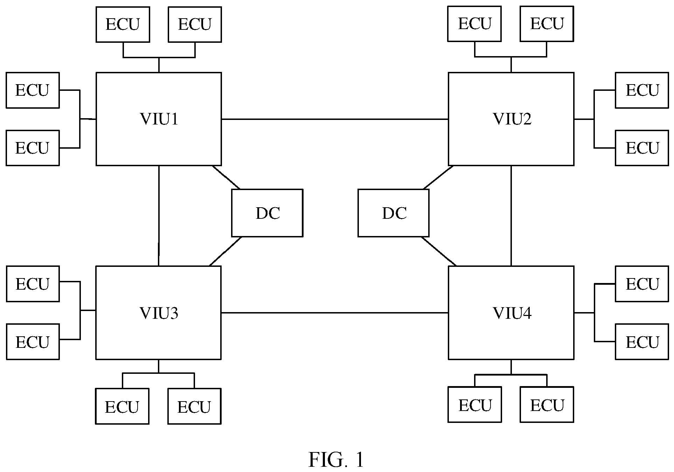

The CCA architecture may include B DCs, N VIUs, and M ECUs, where N, B, and M are all positive integers. The VIU is in communication connection to a plurality of vehicle parts (such as a vehicle event data recorder), and is in communication connection to a DC in a vehicle. For example, FIG. 1 is a schematic diagram of a CCA architecture applicable to an embodiment of this application. As shown in FIG. 1, in the CCA architecture, four VIUs are deployed in a vehicle as zonal gateways. There may be a communication connection between the VIUs, or there may be a communication connection between each VIU and the DC. There are communication connections between the VIUs. For example, the VIUs are connected to each other by using a high-speed Ethernet to perform processing with high bandwidth (a high-definition camera and a high-definition display), low latency, and high reliability. This simplifies vehicle-mounted network configuration, incorporates ECUs, and improves upgrade and maintenance efficiency.

It should be noted that the communication connection can be understood as a wireless connection or a wired connection for information transmission. This is not limited in this embodiment of this application. The wireless connection can be understood as that the VIU communicates with another unit in the vehicle without using a bus, for example, the communication can be performed by using Bluetooth or Wi-Fi. The wired connection can be understood as that the VIU communicates with another unit in the vehicle by using a bus, an Ethernet connection, or the like. For example, a controller local area network (controller area network, CAN) bus, a local interconnect network (local interconnect network, LIN) bus, a high-speed serial computer expansion bus standard (peripheral component interconnect express, PCI-e), or an Ethernet (Ethernet, Eth) communication technology may be used.

It should be noted that the CCA architecture may be further applied to a smart vehicle, a new energy vehicle, a conventional vehicle, or the like, or the CCA architecture may be further applied to an automated driving field, an intelligent driving field, an intelligent networked vehicle field, or the like. This is not limited. New energy vehicles include battery electric vehicles, range-extended electric vehicles, hybrid electric vehicles, fuel cell electric vehicles, hydrogen engine vehicles, other new energy vehicles, and the like. Conventional vehicles include gasoline vehicles and diesel vehicles.

It should be understood that this application is mainly described by using an example in which the CCA architecture is used in the vehicle field. This is not limited. For example, the CCA architecture may also be used in another field in which communication may be performed by using a local area network. Alternatively, for another example, the CCA architecture may be further used in another vehicle, for example, an airplane.

It should be further understood that the embodiments of this application may be applied to the in-vehicle networking (In-vehicle networking) field, for example, an in-vehicle Ethernet (In-vehicle Ethernet), a local area network in vehicle(LAN in vehicle), or an in-vehicle gateway (In-vehicle gateway).

For ease of understanding, the following briefly describes a vehicle event data recorder used in the embodiments of this application. For a detailed description of the vehicle event data recorder, refer to an existing solution. This is not limited.

A vehicle event data recorder, commonly known as a vehicle black box, is a digital electronic recording apparatus that records and stores the driving speed, time, mileage, and other status information of a vehicle, and can output data by using an interface. Some event data recorders are cameras installed on vehicles to record images of the surroundings during driving. The images can be used as evidence in the case of a dispute such as a traffic accident. In addition, to prevent record data from being tampered with or lost, data integrity needs to be protected. For brevity, the vehicle event data recorder is hereinafter referred to as an event data recorder.

An existing solution includes: A hash verification value is calculated for locally stored record data and an integrity protection key together; and if the record data is modified due to various reasons, after the hash value is calculated for the record data, it is found that the hash verification value is inconsistent with a locally stored hash verification value. By using this solution, all record data and corresponding hash verification values are stored in an event data recorder. If the event data recorder is damaged as a whole or is attacked by an attacker to obtain a hash verification value, both the data and the corresponding hash verification value can be tampered with. Therefore, a single point of failure occurs in this solution, and security of all data depends on a single event data recorder. That is, if the integrity protection key of a single device is stolen, the data stored in the device is tampered with and the tampering cannot be detected.

Another existing solution includes: while storing data, an event data recorder uploads the data to a cloud by using the Internet of Vehicles, and then stores the data on the cloud in a distributed manner by using a blockchain. This solution has a high requirement on the Internet of Vehicles. A vehicle needs to be connected to a network in real time, which also consumes a large amount of network traffic of the vehicle. If the vehicle moves to an underground garage or tunnel where the network is disconnected, data backup fails.

In view of this, an embodiment of this application provides a solution, to implement a data backup solution without a connection to a network.

The following describes in detail embodiments provided in this application with reference to the accompanying drawings.

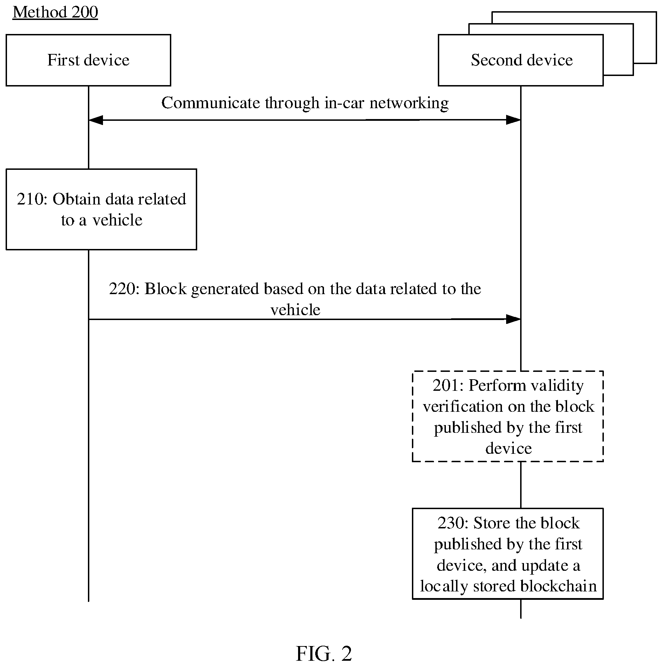

FIG. 2 is a schematic interaction diagram of a method 200 according to an embodiment of this application. The method 200 may include the following steps.

210: A first device obtains data related to a vehicle.

The data related to the vehicle, for example, event log records of the vehicle, may include running data of an actuator in a vehicle part, and may further include data collected by a data collection unit (for example, a sensitive component) in the vehicle part. This is not specifically limited in this embodiment of this application. All record data that needs to be stored in the VIU may be stored in a distributed manner by using this solution. For brevity, the data related to the vehicle is referred to as data. For example, the data (that is, the data related to the vehicle) may include but is not limited to one or more of the following event log records: vehicle status information (such as a driving state, a charging state, and a stop state), vehicle control records in some events (such as a driving speed and braking and steering operation records in a period of time before an accident occurs), network security event information (such as an intrusion detection record), and the like. It should be noted that, in the following embodiments, the data and the event log record are sometimes used alternately, and both are used to represent the data related to the vehicle.

The first device sends information about the data to one or more second devices, and the one or more second devices store the information about the data. The first device communicates with the second device through in-vehicle networking (In-vehicle networking), that is, the first device communicates with the second device without being connected to an external network. By way of example and not limitation, the first device and the second device may communicate with each other by using an in-vehicle Ethernet (In-vehicle Ethernet). In this embodiment of this application, data is maintained in a plurality of different devices in a vehicle, so that data backup can be implemented without a connection to an external network.

The information that is about the data and that is sent by the first device may be raw data, or may be a digest of the raw data, or may be compressed data obtained after the raw data is compressed. This is not limited. The digest of the raw data may be, for example, content obtained by performing some processing on the data. For example, hash algorithm processing is performed on the raw data to obtain a hash value corresponding to the raw data, where the hash value may be used as the digest of the raw data.

Optionally, in this embodiment of this application, in-vehicle event log records may be stored in a distributed manner based on a blockchain.

That is, the method 200 may include steps 220 and 230.

220: A first device publishes, to one or more second devices, a block generated based on the data related to the vehicle.

230: The one or more second devices store the block published by the first device, and update a locally stored blockchain.

That is, the first device may pack the data related to the vehicle into a block, and publish the block to one or more second devices. The block is a block in a blockchain.

For example, the first device may send a block generated based on raw data. For another example, the first device may send a block generated based on compressed data. For another example, the first device may send a block generated based on a digest of data.

Optionally, before step 230, the method 200 may further include step 201.

201: One or more second devices perform validity verification on the block published by the first device.

That is, the second device first performs the validity verification on the block published by the first device. If the validity verification succeeds, the block published by the first device is stored, and the locally stored blockchain is updated; or if the validity verification fails, the block published by the first device is discarded.

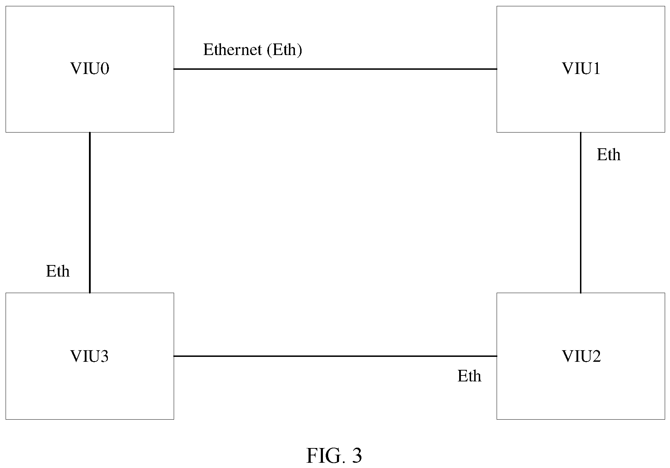

In a possible implementation, both the first device and the second device are VIUs. For example, it is assumed that there are four VIUs in the CCA architecture, which are denoted as VIU0, VIU1, VIU2, and VIU3, respectively. A connection relationship between the four VIUs may be shown in FIG. 3, that is, the four VIUs may be interconnected by using an Ethernet. The four VIUs may share the data related to the vehicle by using a communication connection (such as an Eth) between the VIUs, so that the data related to the vehicle can be stored in a plurality of VIUs. By storing the data in the plurality of VIUs, the CCA architecture is fully utilized to store key event records of vehicles in a distributed manner, thereby ensuring data integrity. For ease of understanding, the following mainly uses VIUs as an example for description.

It should be understood that FIG. 3 shows only connections between the VIUs, and each VIU may be further connected to one or more ECUs and one or more DCs.

It should be further understood that there may be N VIUs in the CCA architecture, where N is a positive integer, and the N VIUs may be denoted as VIU0, ..., and VIU(N-1), respectively.

Optionally, the data obtained by the VIU may be at least any one of the following manners: data collected by the VIU, data collected from an ECU or a DC connected to the VIU, and data collected from another device (for example, a data source device such as an event data recorder).

In a possible implementation, after a vehicle is started, each VIU independently collects event log records for which the VIU is responsible, and then sends information about the collected event log records to other VIUs, so that other VIUs store the event log records. The event log records independently collected by each VIU may include one or more of the following: log records collected by the VIU, log records collected from an ECU or a DC connected to the VIU, and log records collected from another device (for example, a log record source device such as an event data recorder). The following describes how a VIU sends information about collected event log records to other VIUs in detail with reference to several solutions.

Optionally, in this embodiment of this application, in-vehicle event log records may be stored in a distributed manner based on a blockchain.

Blockchain: A blockchain is a string of written records that connect and protect content by using cryptography. Each block contains an encrypted hash of the previous block, a corresponding timestamp, and transaction data. Such a design makes the block content difficult to tamper with. Distributed storage can ensure traceability and anti-tampering.

In this embodiment of this application, a blockchain is maintained in a plurality of different devices (for example, in different VIUs), so that data and corresponding hash verification values can be stored in different devices in a distributed manner, thereby avoiding a single point of failure.

In a possible implementation, after collecting the event log records or the digests of the event log records, the VIU packs event log record data, compressed event log record data, or the digests of the event log records into a block. If a specific condition is met, for example, a condition for publishing the block is met, the block is published to other VIUs. Each of the other VIUs performs validity verification on the block, and updates a locally stored blockchain after the validity verification succeeds, so as to implement persistent storage of the block.

Optionally, each block in the blockchain includes a hash value Hashₙ, a timestamp TimeStampₙ, and a data log. Optionally, in this embodiment of this application, a smart contract may be implemented based on the hash value and the timestamp in the block, so as to avoid using a digital signature mechanism and a proof-of-work mechanism.

The following describes block-related content in detail with reference to several solutions.

Optionally, in this embodiment of this application, some or all of VIUs participating in distributed storage may obtain a symmetric key K, and the symmetric key K may be used in subsequent steps such as blockchain generation and verification. The symmetric key K may also be referred to as a block verification key K or a public key K, and a specific name of the symmetric key K does not limit the protection scope of the embodiments of this application.

In a possible implementation, the symmetric key K is a pre-configured symmetric key. For example, one or more symmetric keys are pre-configured for steps such as blockchain generation and verification. In this implementation, before a block is constructed, a symmetric key may be first negotiated. Further, steps such as block generation and verification may be subsequently completed by using the symmetric key and a hash algorithm.

In another possible implementation, in this embodiment of this application, some or all of VIUs participating in distributed storage jointly negotiate a symmetric key K, and the symmetric key K may be used in subsequent steps such as blockchain generation and verification. In this implementation, before a block is constructed, a symmetric key may be first negotiated. Further, steps such as block generation and verification may be subsequently completed by using the symmetric key and a hash algorithm. In addition, in this embodiment of this application, a key in the block generation and verification processes may be obtained through random negotiation, and may be changed through negotiation at any time, thereby improving security. The following mainly uses this implementation as an example for description.

For example, all of VIUs participating in distributed storage may negotiate a symmetric key K. In another example, some of the VIUs participating in the distributed storage may negotiate the symmetric key K, and then these VIUs may notify other VIUs of the symmetric key. The following mainly uses an example in which all VIUs participating in distributed storage obtain a shared block verification key K through negotiation as an example for description.

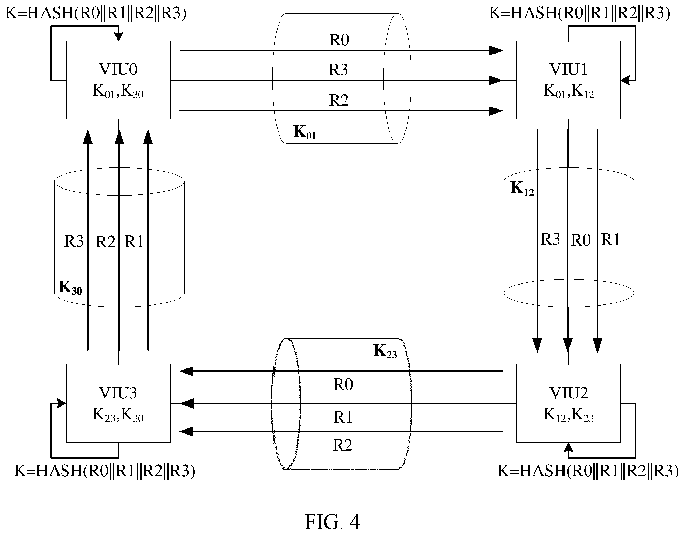

FIG. 4 is a schematic diagram of negotiating a symmetric key K by all VIUs participating in distributed storage applicable to an embodiment of this application. Negotiation of the symmetric key K may roughly include the following steps.
(1) Pre-step: An encrypted communication connection is established between directly connected VIUs.

The encrypted communication connection may use a symmetric key to encrypt data transmitted on a line. It is assumed that a key for encrypted communication between a VIUi and a VIUj is denoted as Kᵢⱼ, where 0≤i≤N-1, and j=i+1 mod N. mod represents a modulo operation, and N represents a quantity of VIUs that participate in distributed storage. As shown in FIG. 4, a key for encrypted communication between a VIU0 and a VIU1 is K₀₁, a key for encrypted communication between the VIU1 and the VIU2 is K₁₂, a key for encrypted communication between a VIU2 and a VIU3 is K₂₃, and a key for encrypted communication between the VIU3 and the VIVO is K₃₀.

### (2) Generate random numbers.

Each VIUᵢ generates its own random number Ri. As shown in FIG. 4, the VIU0 generates a random number R0. For another example, the VIU1 generates a random number R1. For another example, the VIU2 generates a random number R2. For another example, the VIU3 generates a random number R3.

### (3) The VIUs interact with each other.

Round s (1≤s≤N-1) of interaction: Each VIUi encrypts R((i-s+1)mod N) with Kᵢⱼ, and sends the encrypted R((i-s+1)mod N) to the VIUj. For example, in the first round of interaction, the VIUi encrypts R(i mod N) with Kᵢⱼ, and sends the encrypted R(i mod N) to the VIUj. As shown in FIG. 4, in the first round of interaction, the VIU0 encrypts R0 with K₀₁, and sends the encrypted R0 to the VIU1.

### (4) Calculate a key.

After N-1 rounds of interaction, each VIUi receives N-1 random numbers, and then calculates the symmetric key K=HASH(R0∥R1∥R2∥R3) based on the N random numbers. ∥ represents a concatenation operation, and HASH represents a hash algorithm.

It should be understood that the foregoing steps are merely an example for description, and this is not limited. Any solution in which a plurality of VIUs can negotiate to obtain a key in a block generation and verification process is applicable to this embodiment of this application.

It should be further understood that the symmetric key K in the block generation and verification processes may be obtained through random negotiation, and may be changed through negotiation at any time. For example, the symmetric key K may be re-negotiated when a length of a blockchain reaches a specific value. For another example, the symmetric key K may also be periodically changed.

Optionally, in this embodiment of this application, validity verification of the block may be performed based on the symmetric key K. Compared with signature verification and proof-of-work in a conventional blockchain, the validity verification of the block based on a symmetric key better meets high performance requirements of the CCA architecture.

After receiving a block from another VIU, the VIUi verifies validity of the block. The VIUi updates the received block to a locally stored blockchain only after the block validity verification succeeds. After receiving a block from another VIU, the VIUi may use different block validity verification methods based on a status of the VIUi.

For ease of description, the block sent by the another VIU is denoted as Block_{n'}. The following provides descriptions with reference to two scenarios.

Scenario 1: A VIUi receives a Block_{n'} before the VIUᵢ starts to generate a block.

In this scenario, the VIUi can perform validity verification by comparing a Hashₙ obtained through calculation with a Hashₙ in the received Block_{n'}.

In a possible calculation manner, the VIUi calculates Hashₙ=HASH(Hashₙ₋₁∥LogHash∥TimeStampₙ∥K). The Hashₙ₋₁ is stored in a block header of the last block Blockₙ₋₁ in a locally stored blockchain, the LogHash is stored in a block body of the Block_{n'}, and the TimeStampₙ is stored in a block header of the Block_{n'}.

After the VIUi completes the calculation, the Hashₙ obtained by the VIUi through calculation is compared with a Hashₙ in the Block_{n'}. In a possible case, if the Hashₙ obtained by the VIUi through calculation is consistent with the Hashₙ in the Block_{n'}, the block validity verification succeeds. Further, the VIUi may store the received block (that is, the Block_{n'}) in a local blockchain. In another possible case, if the Hashₙ obtained by the VIUi through calculation is inconsistent with the Hashₙ in the Block_{n'}, the Block_{n'} is discarded.

Scenario 2: A Block_{n'} is received when the VIUi is performing a block generation process.

In this scenario, the processing mode varies according to the phase of the VIUi when the block is received.

Example 1: The VIUi receives the Block_{n'} after calculating a block header and before publishing a block.

In this example, the VIUi can perform validity verification by comparing a Hashₙ obtained through calculation with a Hashₙ in the received Block_{n'}.

In a possible calculation manner, the VIUᵢ calculates Hashₙ=HASH(Hashₙ₋₁∥LogHash∥TimeStampₙ∥K). The Hashₙ₋₁ is stored in a block header of the last block Blockₙ₋₁ in a locally stored blockchain, the LogHash is stored in a block body of the Block_{n'}, and the TimeStampₙ is stored in a block header of the Block_{n'}.

After the VIUi completes the calculation, the Hashₙ obtained by the VIUi through calculation is compared with a Hashₙ in the Block_{n'}. In a possible case, if the Hashₙ obtained by the VIUi through calculation is consistent with the Hashₙ in the Block_{n'}, the block validity verification succeeds. Further, the VIUi may store the received block (Block_{n'}) in a local blockchain. Further, the VIUi recalculates a block header for a locally packed block body (including Log and LogHash) of the Blockₙ, and performs subsequent steps. In another possible case, if the Hashₙ obtained by the VIUi through calculation is inconsistent with the Hashₙ in the Block_{n'}, the VIUi discards the Block_{n'} and performs its own normal procedure (for example, publishing a block).

Example 2: The VIUi receives the Block_{n'} in a waiting phase after a block is published.

After the VIU generates and publishes the block, the VIU can wait for a period of time and determine whether to store the generated block based on a status in the waiting phase. The waiting duration may be, for example, predetermined duration, or may be duration set according to an actual situation, or may be duration determined according to a historical communication status. This is not limited.

In this example, the VIUi may perform validity verification by comparing the Hashₙ obtained through calculation with the Hashₙ in the received Block_{n'} and comparing a timestamp TimeStamp in the locally generated Blockₙ with a timestamp TimeStamp in the received Block_{n'}.

In a possible manner, the VIUi calculates Hashₙ=HASH(Hashₙ₋₁∥LogHash∥TimeStampₙ∥K). The Hashₙ₋₁ is stored in a block header of the last block Blockₙ₋₁ in a locally stored blockchain, the LogHash is stored in a block body of the Block_{n'}, and the TimeStampₙ is stored in a block header of the Block_{n'}.

After the VIUi completes the calculation, the Hashₙ obtained by the VIUi through calculation is compared with a Hashₙ in the Block_{n'}.

In a possible case, the Hashₙ obtained by the VIUi through calculation is consistent with the Hashₙ in the Block_{n'}. In this case, the next step may be performed, that is, the VIUi compares the timestamp TimeStamp in the locally generated Blockₙ with the timestamp TimeStamp in the received Block_{n'}.

For example, if the timestamp in the locally generated Blockₙ is earlier, the VIUi discards the received Block_{n'}, and continues to wait for the remaining time. Further, if the block is not received within the remaining time, the VIUi performs its own normal procedure (storing the block). If the block is received within the remaining time, the solution in example 2 is repeatedly executed, that is, the VIUi performs validity verification by comparing the Hashₙ obtained through calculation with the Hashₙ in the received Block., and comparing a timestamp TimeStamp in the locally generated Blockₙ with a timestamp TimeStamp in the received Block_{n'}.

For another example, if the timestamp in the received block Block., is earlier, the block validity verification succeeds, the Block_{n'} is stored in the local blockchain, and then the block header is recalculated for the locally packed block body of the Blockₙ, and subsequent steps are performed.

In another possible case, the Hashₙ obtained by the VIUi through calculation is inconsistent with the Hashₙ in the Block_{n'}. In this case, the VIUi may discard the Block_{n'} and perform its normal procedure, that is, continue to wait for the remaining time. Further, if the block is not received within the remaining time, the VIUi performs its own normal procedure (storing the block). If the block is received within the remaining time, the solution in example 2 is repeatedly executed, that is, the VIUi performs validity verification by comparing the Hashₙ obtained through calculation with the Hashₙ in the received Block_{n'} and comparing a timestamp TimeStamp in the locally generated Blockₙ with a timestamp TimeStamp in the received Block_{n'}.

The foregoing has described manners in which the VIU performs the validity verification with reference to two scenarios. In this embodiment of this application, a smart contract is implemented based on a hash value and a timestamp in a block, to avoid using a digital signature mechanism and a proof-of-work mechanism.

For ease of understanding, the following describes several solutions applicable to the embodiments of this application.

Solution 1: Each VIU can independently collect event log records for which the VIU is responsible. After the VIU collects the event log records, or after the VIU collects a specific quantity of event log records or event log records for a period of time, the VIU packs the event log record data into a block, and then publishes the block to other VIUs. After the validity verification on the block by each of the other VIUs succeeds, a locally stored blockchain is updated, so that the block can be stored persistently.

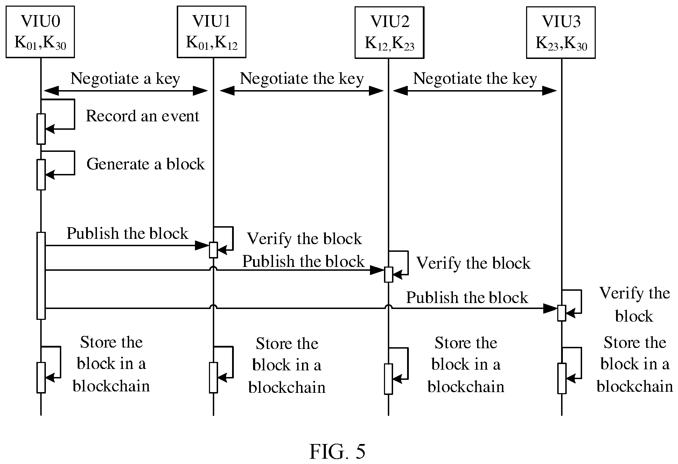

FIG. 5 is a schematic flowchart applicable to solution 1. The embodiment shown in FIG. 5 may include the following step 1 to step 4.

Step 1: Negotiate a key.

As shown in FIG. 5, a VIU0 to a VIU4 may negotiate a symmetric key K, where the symmetric key K is used in subsequent steps such as block generation and verification.

For a manner of negotiating the symmetric key K, refer to the foregoing description. For brevity, details are not described herein again.

Step 2: Generate and publish a block.

As shown in FIG. 5, the VIU0 records an event, and then packs event log record data and generates the block. Then, the VIU0 publishes the block to other VIUs, that is, a VIU1, a VIU2, and a VIU3.

Step 2 is described in detail below.

Step 3: Verify the block.

After receiving a block from another VIU, the VIUi verifies validity of the block. The VIUi updates the received block to a locally stored blockchain only after the block validity verification succeeds. After receiving a block from another VIU, the VIUi may use different block validity verification methods based on a status of the VIUi. Specifically, refer to the foregoing descriptions of scenario 1 and scenario 2. For brevity, details are not described herein again.

Step 4: Store the block in a blockchain.

For a VIU (for example, the VIU0 in FIG. 5) that generates and publishes a block, after generating and publishing the block, the VIU may wait for a period of time. In a possible case, if no block sent by another VIU is received after waiting for a period of time, the VIU may store the block generated by the VIU in a blockchain. In still another possible case, if a block sent by another VIU is received in a waiting process, corresponding processing may be performed based on example 2 in the foregoing scenario 2.

For a VIU (for example, the VIU1, the VIU2, or the VIU3 in FIG. 5) that receives a block, after validity verification of the block succeeds, the VIU may update the received block to a locally stored blockchain.

It should be understood that sequence numbers of the steps do not mean an execution sequence, and the execution sequence of the processes should be determined based on functions and internal logic of the processes.

The following describes step 2 in detail with reference to two aspects.

In aspect 1, a structure of a block is described.

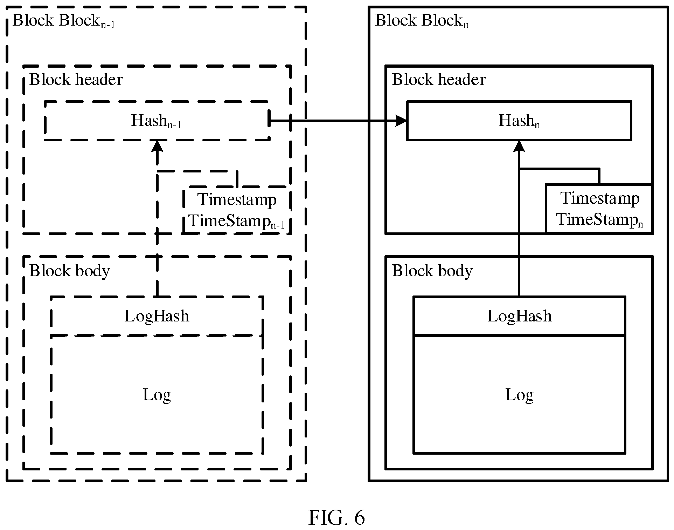

In a possible implementation, each block in a blockchain includes two parts: a block header and a block body. For ease of description, a block is denoted as Blockₙ. Optionally, the block header includes a hash value Hashₙ and a timestamp TimeStampₙ, and the block body includes record data Log and LogHash. Blocks Blockₙ₋₁ and Blockₙ are used as an example. FIG. 6 shows a possible structure of a single block. The Blockₙ₋₁ is used as an example. The block Blockₙ₋₁ includes two parts: a block header and a block body. The block header includes Hashₙ₋₁ and a timestamp TimeStampₙ₋₁, and the block body includes record data Log and LogHash.

It should be understood that a structure of a block shown in FIG. 6 is merely an example for description. This is not limited. For example, the block shown in FIG. 6 may be deformed based on an actual requirement, and a structure of the deformed block is also applicable to this embodiment of this application.

In aspect 2, a basic block generation procedure is described.

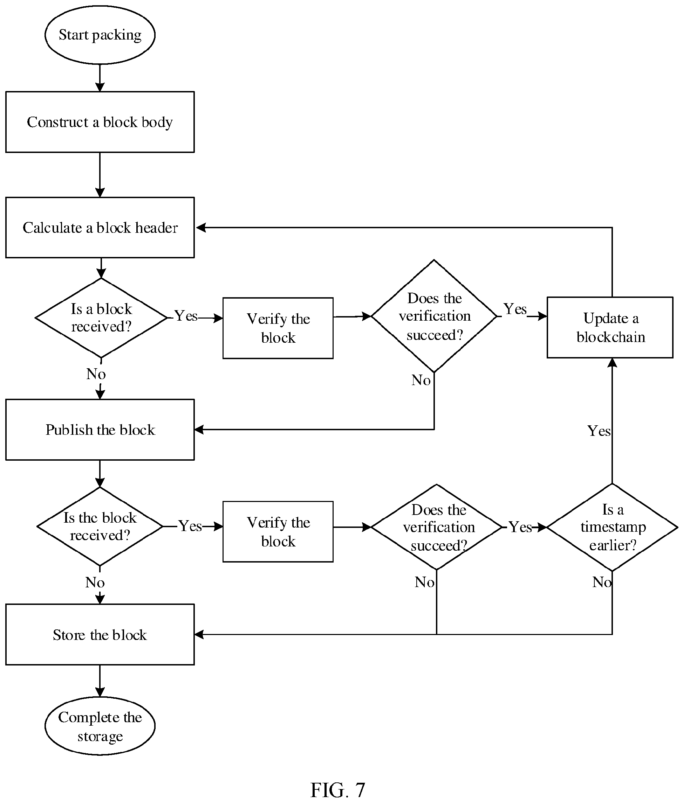

FIG. 7 shows a possible block generation procedure. The Blockₙ is used as an example. A process in which the VIUi generates the Blockₙ may include the following steps.
(1) Construct a block body.

The VIUi packs event log record data, which is denoted as Log. The VIUi calculates LogHash=HASH(Log∥IDi). HASH is a hash algorithm. IDi identifies an identity of the VIUi, and a specific value may be self-defined (for example, may be a chip serial number). The VIUi stores Log and LogHash as the block body of the Blockₙ.

### (2) Calculate a block header.

The VIUi calculates Hashₙ=HASH(Hashₙ₋₁∥LogHash∥TimeStampₙ∥K). HASH is a hash algorithm, Hashₙ₋₁ is a block header hash value of the last block in a blockchain of the current VIU, and TimeStampₙ is a timestamp at a current moment. If a block sent by another VIU is received after the block header is calculated, the block verification starts. If the verification succeeds, the local blockchain is updated, and then the block header is recalculated for the block body (that is, step 2 is performed again); or if no block is received or the verification fails after the block is received, the next step is performed (that is, the block is published).

For a block verification solution, refer to the foregoing descriptions. For brevity, details are not described herein again.

### (3) Publish a block.

The VIUi broadcasts the generated block Blockₙ to other VIUs, and stores the block in the local blockchain after waiting for a specific period of time. If a block sent by another VIU is received during waiting, the block verification starts. If the verification succeeds, the local blockchain is updated, and then the block header is recalculated for the block body; or if no block is received or the verification fails after the block is received, step 4 is performed (that is, the block is stored).

For a block verification solution, refer to the foregoing descriptions. For brevity, details are not described herein again.

The foregoing has briefly described solution 1. For content that is not described in detail in solution 1, refer to the foregoing descriptions.

Based on solution 1, after collecting logs, each VIU sends the logs to other VIUs in the vehicle by publishing a block. In this way, the record data is stored and backed up in a distributed manner in the vehicle, thereby preventing the record data from being tampered with or lost due to an attack or damage to a single device. In addition, transmission and verification of all blocks need only in-vehicle components and in-vehicle network communication, and do not depend on an external network of the vehicle. Record data can be stored and backed up in a distributed manner in an offline environment. There is no requirement on an external networking capability of the vehicle, and external networking bandwidth of the vehicle is not occupied. In addition, the block generation and verification mechanisms use a hash algorithm, and do not need a digital signature mechanism, a certificate verification mechanism, or a proof-of-work mechanism. Therefore, computational overheads are low, and performance is high.

Solution 2: Each VIU can independently collect event log records for which the VIU is responsible. After the VIU collects the event log records, or after the VIU collects a specific quantity of event log records or event log records in a specific period of time, the VIU compresses event log record data, form a block by using the compressed data, and publishes the block. After the validity verification on the block by each of the other VIUs succeeds, each of the other VIUs updates a locally stored blockchain, so that the block can be stored persistently.

For example, solution 2 is applicable to a scenario in which event log records include a large amount of data (for example, video data). In these scenarios, for example, when the block body includes a large amount of data, additional compression may be performed on the data, and compression of the data in the block body may further save in-vehicle communication resources.

For another example, solution 2 may also be applicable to a scenario in which data has a specific lossless compression capability. In these scenarios, for example, when the block body includes a large amount of data, and the data in the block supports lossless compression or a loss of lossy compression is within a specific range, additional compression may be performed on the data. Compression of the data in the block body may further save in-vehicle communication resources.

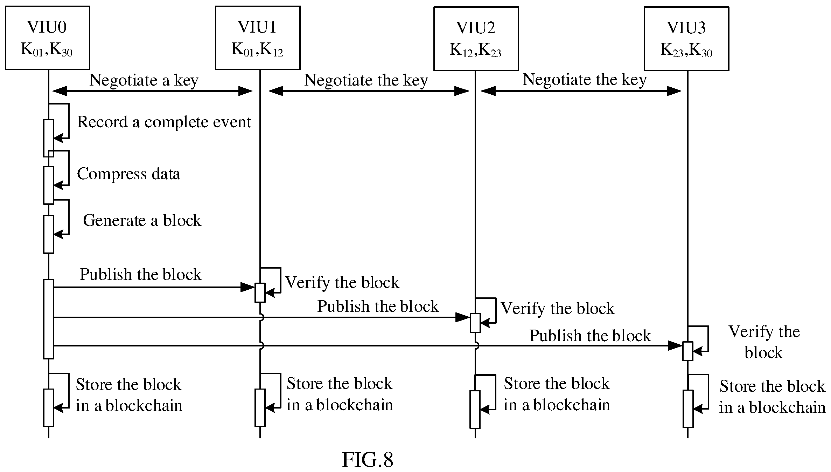

FIG. 8 is a schematic flowchart applicable to solution 2. The embodiment shown in FIG. 8 may include the following step 1 to step 4.

Step 1: Negotiate a key.

As shown in FIG. 8, a VIU0 to a VIU4 may negotiate a symmetric key K, where the symmetric key K is used in subsequent steps such as block generation and verification.

For a manner of negotiating the symmetric key K, refer to the foregoing description. For brevity, details are not described herein again.

Step 2: Generate and publish a block.

In solution 2, each VIU can independently collect event log records for which it is responsible, compress data, form a block by using the compressed data, and publish the block. Different from a manner of generating a block by using complete event log records in solution 1, in solution 2, after the complete event log records are packed, the complete event records may be compressed when a block body is constructed, and then the compressed data is stored as block body data and subsequent steps are performed.

In a possible manner, in solution 2, the step of constructing the block body is changed to the following manner:

The VIUi packs event log record data, which is denoted as Log. Then, the Log is compressed to obtain sLog=Compression algorithm (Log), and sLogHash=HASH(sLog∥IDi) is calculated, where HASH represents a hash algorithm, and IDi identifies the VIUi. Both sLog and sLogHash are stored as the block body of the Blockₙ.

For a manner of calculating the block header, refer to the description in solution 1. For brevity, details are not described herein again.

Step 3: Verify the block.

After receiving a block from another VIU, the VIUi verifies validity of the block. The VIUi updates the received block to a locally stored blockchain only after the block validity verification succeeds. After receiving a block from another VIU, the VIUi may use different block validity verification methods based on a status of the VIUi. Specifically, refer to the foregoing descriptions of scenario 1 and scenario 2. For brevity, details are not described herein again.

Step 4: Store the block in a blockchain.

For a VIU (for example, the VIU0 in FIG. 8) that generates and publishes a block, after generating and publishing the block, the VIU may wait for a period of time. In a possible case, if no block sent by another VIU is received after waiting for a period of time, the VIU may store the block generated by the VIU in a blockchain. In still another possible case, if a block sent by another VIU is received in a waiting process, corresponding processing may be performed based on example 2 in the foregoing scenario 2.

For a VIU (for example, the VIU1, the VIU2, or the VIU3 in FIG. 8) that receives a block, after validity verification of the block succeeds, the VIU may update the received block to a locally stored blockchain.

It should be understood that sequence numbers of the steps do not mean an execution sequence, and the execution sequence of the processes should be determined based on functions and internal logic of the processes.

It should be further understood that for content that is not described in detail in solution 2, such as a manner of calculating a block header and a block generation procedure, refer to the description in solution 1.

Based on solution 2, after collecting logs, each VIU sends the logs to other VIUs in the vehicle by publishing a block. In this way, the record data is stored and backed up in a distributed manner in the vehicle, thereby preventing the record data from being tampered with or lost due to an attack or damage to a single device. In addition, transmission and verification of all blocks need only in-vehicle components and in-vehicle network communication, and do not depend on an external network of the vehicle. Record data can be stored and backed up in a distributed manner in an offline environment. There is no requirement on an external networking capability of the vehicle, and external networking bandwidth of the vehicle is not occupied. In addition, the block generation and verification mechanisms use a hash algorithm, and do not need a digital signature mechanism, a certificate verification mechanism, or a proof-of-work mechanism. Therefore, computational overheads are low, and performance is high. In addition, data in the block body is compressed, so that in-vehicle communication resources can be further saved.

Solution 3: Each VIU can independently collect event log records for which the VIU is responsible. After the VIU collects the event log records, or after the VIU collects a specific quantity of event log records or event log records in a period of time, the VIU forms a block by using digests of packed data and publishes the block. After the validity verification on the block by each of the other VIUs succeeds, each of the other VIUs updates a locally stored blockchain, so that the block can be stored persistently.

For example, solution 3 is applicable to a scenario in which event log records include a large amount of data (for example, video data). For another example, solution 3 may also be applicable to a scenario in which data does not have a specific lossless compression capability or a loss of lossy compression exceeds a specific range. In these scenarios, digests of log records are stored in a distributed manner and backed up in a plurality of VIUs in a vehicle. That is, the digests of the data are stored in a distributed manner by using a blockchain, so that a function of distributed verification of record data in the vehicle can be implemented.

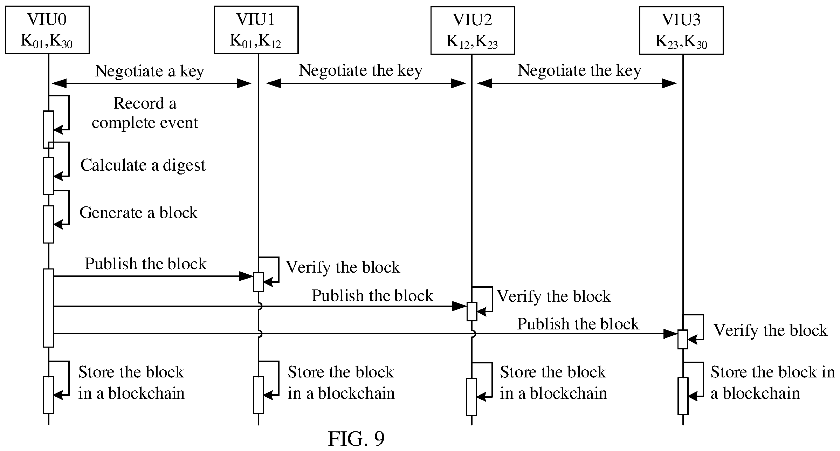

FIG. 9 is a schematic flowchart applicable to solution 3. The embodiment shown in FIG. 9 may include the following step 1 to step 4.

Step 1: Negotiate a key.

As shown in FIG. 9, a VIU0 to a VIU4 may negotiate a symmetric key K, where the symmetric key K is used in subsequent steps such as block generation and verification.

For a manner of negotiating the symmetric key K, refer to the foregoing description. For brevity, details are not described herein again.

Step 2: Generate and publish a block.

In solution 3, each VIU may independently collect event log records for which the VIU is responsible, form a block by using a digest of packed data, and publish the block. After verification by each VIU succeeds, a locally stored blockchain is maintained, so that the block can be stored persistently. Different from a manner of generating a block by using complete event log records in solution 1, and also different from a manner of forming a block by using compressed data in solution 2, in solution 3, after the complete event log records are packed and a hash value is calculated, the packed data is stored locally, and only the hash value is stored as a block body and subsequent steps are performed.

In a possible manner, in solution 3, the step of constructing the block body is changed to the following manner:

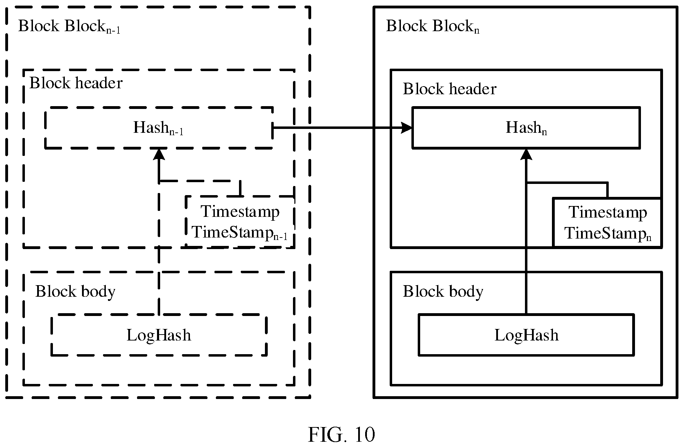

The VIUi packs event log record data, which is denoted as Log. LogHash=HASH(Log∥IDi) is calculated, where HASH is a hash algorithm, and IDi identifies an identity of the VIUi. Only LogHash is stored as the block body of the Blockₙ. A block structure in this embodiment is shown in FIG. 10.

For a manner of calculating the block header, refer to the description in solution 1. For brevity, details are not described herein again.

Step 3: Verify the block.

After receiving a block from another VIU, the VIUi verifies validity of the block. The VIUi updates the received block to a locally stored blockchain only after the block validity verification succeeds. After receiving a block from another VIU, the VIUi may use different block validity verification methods based on a status of the VIUi. Specifically, refer to the foregoing descriptions of scenario 1 and scenario 2. For brevity, details are not described herein again.

Step 4: Store the block in a blockchain.

For a VIU (for example, the VIU0 in FIG. 9) that generates and publishes a block, after generating and publishing the block, the VIU may wait for a period of time. In a possible case, if no block sent by another VIU is received after waiting for a period of time, the VIU may store the block generated by the VIU in a blockchain. In still another possible case, if a block sent by another VIU is received in a waiting process, corresponding processing may be performed based on example 2 in the foregoing scenario 2.

For a VIU (for example, the VIU1, the VIU2, or the VIU3 in FIG. 9) that receives a block, after validity verification of the block succeeds, the VIU may update the received block to a locally stored blockchain.

It should be understood that sequence numbers of the steps do not mean an execution sequence, and the execution sequence of the processes should be determined based on functions and internal logic of the processes.

It should be further understood that for content that is not described in detail in solution 3, such as a manner of calculating a block header and a block generation procedure, refer to the description in solution 1.

Based on solution 3, each VIU sends the collected log digests to other VIUs in the vehicle by publishing a block. In this way, the record data can be verified in a distributed manner in the vehicle. Hash value verification can be used to detect whether the record data is tampered with or incorrect due to an attack or damage to a single device. In addition, transmission and verification of all blocks need only in-vehicle components and in-vehicle network communication, and do not depend on an external network of the vehicle. Record data can be stored and backed up in a distributed manner in an offline environment. There is no requirement on an external networking capability of the vehicle, and external networking bandwidth of the vehicle is not occupied. In addition, the block generation and verification mechanisms use a hash algorithm, and do not need a digital signature mechanism, a certificate verification mechanism, or a proof-of-work mechanism. Therefore, computational overheads are low, and performance is high. In addition, a block body of each block includes a small amount of data and the amount is fixed, so that a transmitted data volume can be compressed as much as possible, thereby saving in-vehicle communication resources and reducing impact on performance of in-vehicle communication.

Solution 4: Each VIU collects only digests of event log records, forms a block by using the digests, and publishes the block. After the validity verification on the block by each of the other VIUs succeeds, each of the other VIUs updates a locally stored blockchain, so that the block can be stored persistently.

For example, solution 4 is applicable to a scenario in which event log records include a large amount of data (for example, video data). For another example, solution 4 may also be applicable to a scenario in which data does not have a specific lossless compression capability or a loss of lossy compression exceeds a specific range. In these scenarios, digests of log records are stored in a distributed manner and backed up in a plurality of VIUs in a vehicle. That is, the digests of the data are stored in a distributed manner by using a blockchain, so that a function of distributed verification of record data in the vehicle can be implemented. In addition, in solution 4, the VIU may collect only digests of the event log record data, and does not need to store complete event log records.

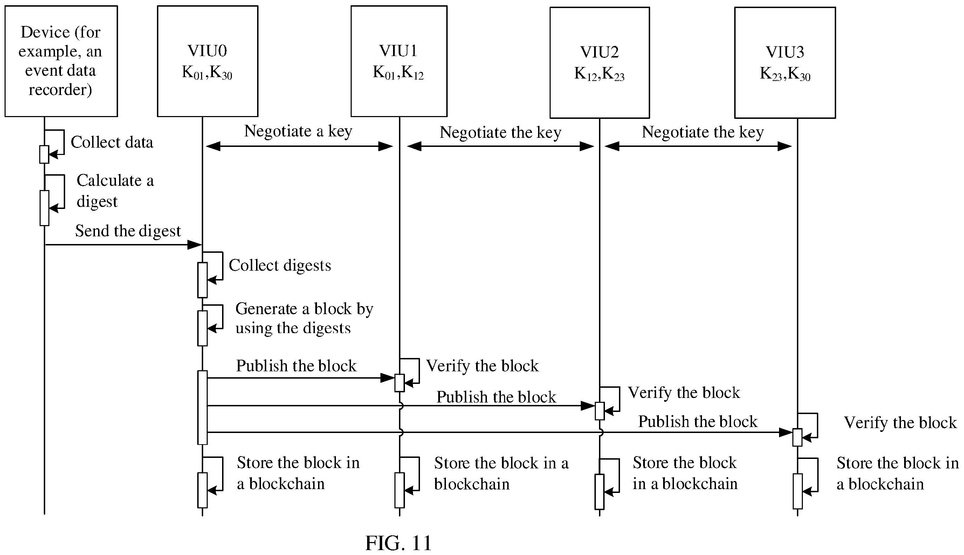

FIG. 11 is a schematic flowchart applicable to solution 4. The embodiment shown in FIG. 11 may include the following step 1 to step 5.

Step 1: Collect digests.

In this embodiment of this application, a VIU may not need to be responsible for collection and packing. A data source device (for example, an event data recorder) collects and packs data, calculates a digest of the data, and then sends the digest of the data to the VIU. The VIU collects digests of the data and performs subsequent steps such as block generation, publishing, verification, and storage.

Step 2: Negotiate a key.

As shown in FIG. 11, a VIU0 to a VIU4 may negotiate a symmetric key K, where the symmetric key K is used in subsequent steps such as block generation and verification.

For a manner of negotiating the symmetric key K, refer to the foregoing description. For brevity, details are not described herein again.

Step 3: Generate and publish a block.

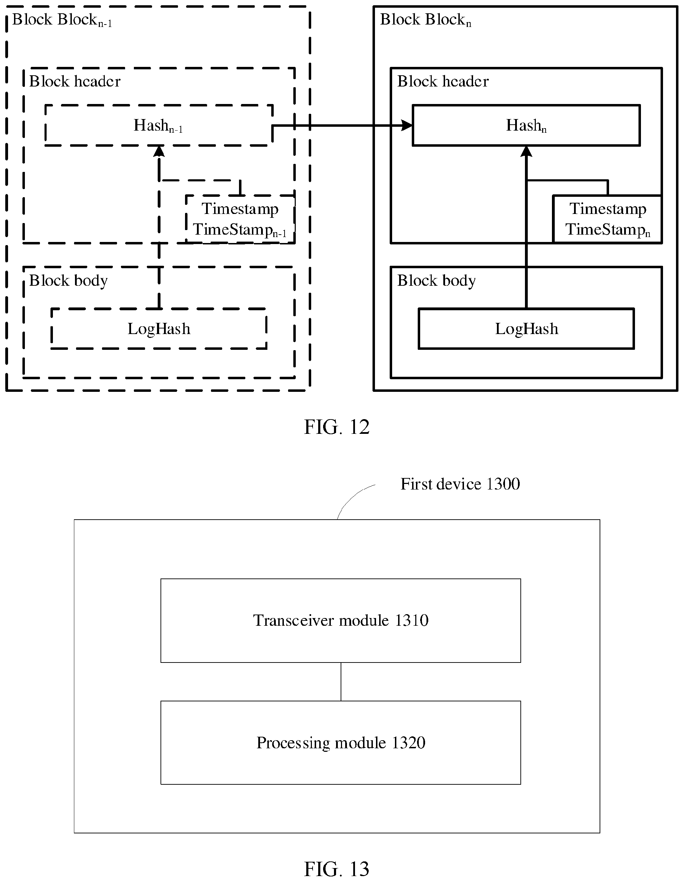

In this embodiment of this application, each VIU does not need to collect complete event log records, and may collect only digests of event log records, form a block by using the digests, and publish the block. After verification by each VIU succeeds, a locally stored blockchain is maintained, so that the block can be stored persistently. Different from a manner in which complete event log records are used to generate a block in solution 1, in solution 4, the VIU does not need to be responsible for collection and packing. A data source device collects and packs data, calculates a digest of the data, and then sends the digest of the data to the VIU. The VIU collects digests of the data and performs subsequent steps such as block generation, publishing, verification, and storage. A block structure in this embodiment is shown in FIG. 12.

Step 4: Verify the block.

After receiving a block from another VIU, the VIUi verifies validity of the block. The VIUi updates the received block to a locally stored blockchain only after the block validity verification succeeds. After receiving a block from another VIU, the VIUi may use different block validity verification methods based on a status of the VIUi. Specifically, refer to the foregoing descriptions of scenario 1 and scenario 2. For brevity, details are not described herein again.

Step 5: Store the block in a blockchain.

For a VIU (for example, the VIU0 in FIG. 11) that publishes a block, after publishing the block, the VIU may wait for a period of time. In a possible case, if no block sent by another VIU is received after waiting for a period of time, the VIU may store the block generated by the VIU in a blockchain. In still another possible case, if a block sent by another VIU is received in a waiting process, corresponding processing may be performed based on example 2 in the foregoing scenario 2.

For a VIU (for example, the VIU1, the VIU2, or the VIU3 in FIG. 11) that receives a block, after validity verification of the block succeeds, the VIU may update the received block to a locally stored blockchain.

It should be understood that sequence numbers of the steps do not mean an execution sequence, and the execution sequence of the processes should be determined based on functions and internal logic of the processes.

It should be further understood that for content that is not described in detail in solution 4, for example, a manner of calculating a block header, refer to the description in solution 1.

Based on solution 4, each VIU sends the collected log digests to other VIUs in the vehicle by publishing a block. In this way, the record data can be verified in a distributed manner in the vehicle. Hash value verification can be used to detect whether the record data is tampered with or incorrect due to an attack or damage to a single device. In addition, transmission and verification of all blocks need only in-vehicle components and in-vehicle network communication, and do not depend on an external network of the vehicle. Record data can be stored and backed up in a distributed manner in an offline environment. There is no requirement on an external networking capability of the vehicle, and external networking bandwidth of the vehicle is not occupied. In addition, the block generation and verification mechanisms use a hash algorithm, and do not need a digital signature mechanism, a certificate verification mechanism, or a proof-of-work mechanism. Therefore, computational overheads are low, and performance is high. In addition, a block body of each block includes a small amount of data and the amount is fixed, so that a transmitted data volume can be compressed as much as possible, thereby saving in-vehicle communication resources and reducing impact on performance of in-vehicle communication. In addition, the VIU does not need to store complete event records, which further saves storage space in the VIU.

The foregoing has described four solutions as examples. It should be understood that variants of the four solutions are all applicable to this embodiment of this application. Solution 4 is used as an example. For example, the data source device may send the collected data to a VIU, and the VIU may generate a block and publish the block by using solution 1 to solution 3.

It should be understood that in some of the foregoing embodiments, the VIU is used as an example for description. However, this does not constitute a limitation on this application. A plurality of devices that may have communication connections in any vehicle are applicable to this embodiment of this application.

Based on the foregoing technical solution, an in-vehicle distributed storage solution based on a blockchain is used to perform in-vehicle distributed storage, backup, and integrity protection on some log records generated in a driving process of a vehicle, to ensure integrity of in-vehicle event log records. In addition, in some embodiments, block generation and block verification in a blockchain and a smart contract for constructing a blockchain are improved, and generation, verification, and storage of a block are completed by using a symmetric key and a hash algorithm, so that the blockchain can be deployed in an internal component of a vehicle. In addition, the symmetric key used in the blockchain construction process is obtained through negotiation and can be updated at any time, thereby providing higher security.

Embodiments described in this specification may be independent solutions, or may be combined based on internal logic. All these solutions fall within the protection scope of this application.

It can be understood that, in the foregoing method embodiments, methods and operations implemented by a device (for example, a VIU, or for example, a first device or a second device) may also be implemented by a component (for example, a chip or a circuit) that can be used in the device. That is, in the foregoing method embodiments, methods and operations implemented by an entire system (for example, a VIU, or for example, a first device or a second device) may also be implemented by a component (for example, a chip or a circuit) that can be used in the entire system.

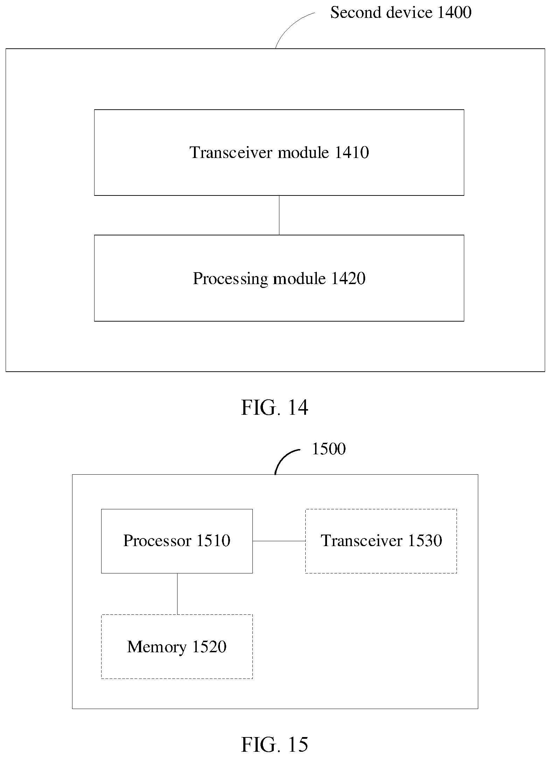

The foregoing has described the methods provided in embodiments of this application in detail with reference to FIG. 2 to FIG. 12. The following describes apparatuses provided in embodiments of this application with reference to FIG. 13 and FIG. 14. It should be understood that descriptions of apparatus embodiments are corresponding to the descriptions of the method embodiments. Therefore, for content that is not described in detail, refer to the foregoing method embodiments. For brevity, details are not described herein again.

The foregoing mainly describes, from a perspective of interaction between devices, the solutions provided in embodiments of this application. It can be understood that, to implement the foregoing functions, the devices, for example, the first device and the second device, include corresponding hardware structures and/or software modules for performing the functions. A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In the embodiments of this application, the device (for example, the VIU) may be divided into functional modules based on the foregoing method examples. For example, each functional module may be obtained through division based on each corresponding function, or two or more functions may be integrated into one module. The integrated module may be implemented in a form of hardware, or may be implemented in a form of a software functional module. It should be noted that module division in the embodiments of this application is an example and is merely logical function division. During actual implementation, there may be another division manner. An example in which each functional module is obtained through division based on each corresponding function is used below for description.

FIG. 13 is a schematic block diagram of a first device (such as a VIU) according to an embodiment of this application. The first device 1300 includes a transceiver module 1310 and a processing module 1320. The transceiver module 1310 may implement a corresponding communication function, and the processing unit 1320 is configured to perform data processing. The transceiver module 1310 may also be referred to as a communication interface or a communication unit.

Optionally, the first device 1300 may further include a storage module. The storage module may be configured to store instructions and/or data, for example, configured to store a blockchain. The processing module 1320 may read the instructions and/or the data in the storage module, so that the first device implements the foregoing method embodiments.

The first device 1300 may be configured to perform an action performed by a VIU in the foregoing method embodiments. In this case, the first device 1300 may be a VIU or a component that can be disposed in the VIU. The transceiver module 1310 is configured to perform receiving-related and sending-related operations on the VIU side in the foregoing method embodiments. The processing module 1320 is configured to perform processing-related operations on the VIU side in the foregoing method embodiments.

In a possible implementation, the transceiver module 1310 is configured to obtain data related to a vehicle; the processing module 1320 is configured to generate a block based on the data; and the transceiver module 1310 is further configured to publish the block to one or more second devices through in-vehicle networking of the vehicle.

In an example, the transceiver module 1310 is further configured to obtain a symmetric key, where the symmetric key can be used to complete block generation and verification.

In another example, the symmetric key is a pre-configured symmetric key, or the symmetric key is a symmetric key negotiated by the first device 1300 with the one or more second devices.

In still another example, the processing module 1320 is specifically configured to: compress the data, and generate the block based on the compressed data; or generate the block based on a digest of the data.

In still another example, the block includes a hash value and a timestamp.

In still another example, the transceiver module 1310 is specifically configured to receive the vehicle data collected by an event data recorder.

In still another example, both the first device 1300 and the second device are vehicle integrated/integration units VIUs.

The first device 1300 may implement steps or procedures corresponding to the VIU in the method embodiments of this application. The first device 1300 may include modules configured to perform the methods performed by the VIU in the method embodiments of FIG. 2 to FIG. 12. In addition, the modules in the first device 1300 and the foregoing other operations and/or functions are intended to implement corresponding procedures in the method embodiments in FIG. 2 to FIG. 12.

It should be understood that a specific process in which the modules perform the foregoing corresponding steps is described in detail in the foregoing method embodiments. For brevity, details are not described herein again.

The processing module 1320 in the foregoing embodiment may be implemented by at least one processor or a processor-related circuit. The transceiver module 1310 may be implemented by a transceiver or a transceiver-related circuit. The transceiver module 1310 may also be referred to as a communication unit or a communication interface. The storage module may be implemented by using at least one memory.

For example, the first device 1300 may be a VIU.

An embodiment of this application further provides a vehicle including the foregoing apparatus (for example, the first device 1300).

FIG. 14 is a schematic block diagram of a second device (such as a VIU) according to an embodiment of this application. The second device 1400 includes a transceiver module 1410 and a processing module 1420. The transceiver module 1410 may implement a corresponding communication function, and the processing unit 1420 is configured to perform data processing. The transceiver module 1410 may also be referred to as a communication interface or a communication unit.

Optionally, the second device 1400 may further include a storage module. The storage module may be configured to store instructions and/or data, for example, configured to store a blockchain. The processing module 1420 may read the instructions and/or the data in the storage module, so that the first device implements the foregoing method embodiments.

The second device 1400 may be configured to perform an action performed by a VIU in the foregoing method embodiments. In this case, the second device 1400 may be a VIU or a component that can be disposed in the VIU. The transceiver module 1410 is configured to perform receiving-related and sending-related operations on the VIU side in the foregoing method embodiments. The processing module 1420 is configured to perform processing-related operations on the VIU side in the foregoing method embodiments.

In a possible implementation, the transceiver module 1410 is configured to receive, through in-vehicle networking of a vehicle, a block that is generated based on data related to the vehicle and that is published by the first device. The processing module 1420 is configured to perform validity verification on the block published by the first device. The processing module 1420 is further configured to: after the validity verification succeeds, store the block published by the first device, and update a locally stored blockchain. Alternatively, the transceiver module 1410 is configured to receive, through in-vehicle networking of a vehicle, a block that is generated based on data related to the vehicle and that is published by a first device. The processing module 1420 is configured to perform validity verification on the block published by the first device. The storage module is configured to: after the validity verification succeeds, store the block published by the first device, and update a locally stored blockchain.

In an example, the transceiver module 1410 is further configured to obtain a symmetric key, where the symmetric key can be used to complete block generation and verification.

In another example, the symmetric key is a pre-configured symmetric key, or the symmetric key is a symmetric key negotiated by the second device 1400 with the first device.

In still another example, the block published by the first device includes a hash value and a timestamp. The processing module 1420 is specifically configured to perform validity verification by comparing a hash value obtained by the processing module 1420 through calculation with the hash value in the block published by the first device.

In still another example, the processing module 1420 is specifically configured to: when the hash value obtained by the processing module 1420 through calculation is inconsistent with the hash value in the block published by the first device, determine that the validity verification fails, and discard, by the second device 1400, the block published by the first device.

In still another example, the processing module 1420 is specifically configured to: before the second device 1400 generates a block or before the second device 1400 publishes a block, if the block published by the first device is received, and the hash value obtained by the processing module 1420 through calculation is consistent with the hash value in the block published by the first device, determine, by the processing module 1420, that the validity verification succeeds, and store the block published by the first device.

In still another example, the processing module 1420 is specifically configured to: after the second device 1400 publishes a block and before the block published by the second device 1400 is stored, if the block published by the first device is received, the hash value obtained by the processing module 1420 through calculation is consistent with the hash value in the block published by the first device, and the timestamp in the block published by the first device is earlier than the timestamp in the block published by the second device 1400, determine that the validity verification succeeds, and store, by the second device 1400, the block published by the first device.

In still another example, the processing module 1420 is specifically configured to: after the second device 1400 publishes a block and before the block published by the second device 1400 is stored, if the block published by the first device is received, the hash value obtained by the processing module 1420 through calculation is consistent with the hash value in the block published by the first device, and the timestamp in the block published by the first device is later than the timestamp in the block published by the second device 1400, determine that the validity verification fails, and discard, by the second device 1400, the block published by the first device.

In still another example, the hash value obtained by the processing module 1420 through calculation is obtained through calculation based on one or more of the following: the timestamp in the block published by the first device, the symmetric key between the second device 1400 and the first device, a hash value of the last block in the blockchain locally stored by the second device 1400, data in the block published by the first device, and an identifier of the first device in the block published by the first device.

In still another example, the data related to the vehicle includes vehicle data collected by an event data recorder.

In still another example, the first device or the second device 1400 or both are vehicle integrated/integration units VIUs.

The second device 1400 may implement steps or procedures corresponding to the VIU in the method embodiments of this application. The second device 1400 may include modules configured to perform the methods performed by the VIU in the method embodiments of FIG. 2 to FIG. 12. In addition, the modules in the second device 1400 and the foregoing other operations and/or functions are intended to implement corresponding procedures in the method embodiments in FIG. 2 to FIG. 12.

It should be understood that a specific process in which the modules perform the foregoing corresponding steps is described in detail in the foregoing method embodiments. For brevity, details are not described herein again.

The processing module 1420 in the foregoing embodiment may be implemented by at least one processor or a processor-related circuit. The transceiver module 1410 may be implemented by a transceiver or a transceiver-related circuit. The transceiver module 1410 may also be referred to as a communication unit or a communication interface. The storage module may be implemented by using at least one memory.

For example, the second device 1400 may be a VIU.

An embodiment of this application further provides a vehicle including the foregoing apparatus (for example, the second device 1400).

As shown in FIG. 15, an embodiment of this application further provides a data storage apparatus 1500. The data storage apparatus 1500 includes a processor 1510. The processor 1510 is coupled to the memory 1520. The memory 1520 is configured to store a computer program or instructions and/or data. The processor 1510 is configured to execute the computer program or the instructions and/or the data stored in the memory 1520, so that the methods in the foregoing method embodiments are performed.

Optionally, the data storage apparatus 1500 includes one or more processors 1510.

Optionally, as shown in FIG. 15, the communication apparatus 1500 may further include a memory 1520.

Optionally, the data storage apparatus 1500 may include one or more memories 1520.

Optionally, the memory 1520 and the processor 1510 may be integrated or disposed separately.

Optionally, as shown in FIG. 15, the data storage apparatus 1500 may further include a transceiver 1530. The transceiver 1530 is configured to receive and/or send a signal. For example, the processor 1510 is configured to control the transceiver 1530 to receive and/or send a signal.

In a solution, the data storage apparatus 1500 is configured to implement operations performed by the first device (for example, a VIU) in the foregoing method embodiments.

For example, the processor 1510 is configured to implement processing-related operations performed by the first device (for example, a VIU) in the foregoing method embodiments, and the transceiver 1530 is configured to implement receiving-related and sending-related operations performed by the first device (for example, a VIU) in the foregoing method embodiments.

In another solution, the communication apparatus 1500 is configured to implement operations performed by the second device (for example, a VIU) in the foregoing method embodiments.

For example, the processor 1510 is configured to implement processing-related operations performed by the second device (for example, a VIU) in the foregoing method embodiments, and the transceiver 1530 is configured to implement receiving-related and sending-related operations performed by the second device (for example, a VIU) in the foregoing method embodiments.

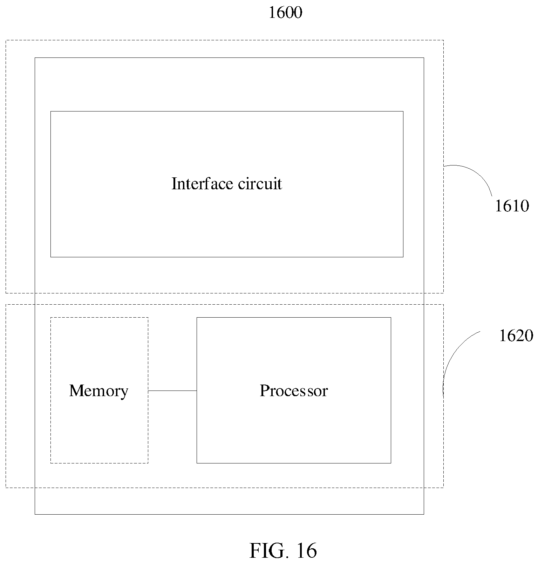

An embodiment of this application further provides a data storage apparatus 1600. For example, the apparatus 1600 may be a first device (for example, a VIU), or may be a chip. The apparatus 1600 may be configured to perform operations performed by the first device (for example, a VIU) in the foregoing method embodiments. In another example, the apparatus 1600 may be a second device (for example, a VIU), or may be a chip. The apparatus 1600 may be configured to perform operations performed by the second device (for example, a VIU) in the foregoing method embodiments. FIG. 16 is a simplified schematic diagram of the apparatus 1600. The apparatus 1600 may include a part 1610 and a part 1620. The part 1610 is mainly configured to receive and send a signal and perform conversion between a radio frequency signal and a baseband signal. The part 1620 is mainly configured to perform processing, control the apparatus 1600, and the like. The part 1610 may usually be referred to as a transceiver unit, a transceiver machine, a transceiver circuit, a transceiver, or the like. The part 1620 is usually a control center of the apparatus 1600, may usually be referred to as a processing unit, and is configured to control the apparatus 1600 to perform processing operations in the foregoing method embodiments.

The transceiver unit of the part 1610 may include an interface circuit or a radio frequency circuit. Optionally, in the part 1610, a component configured to implement a receiving function may be considered as a receiving unit, and a component configured to implement a sending function may be considered as a sending unit. That is, the part 1610 includes the receiving unit and the sending unit. The receiving unit may also be referred to as a receiving machine, a receiver, a receiving circuit, or the like. The sending unit may be referred to as a transmitter machine, a transmitter, a transmitter circuit, or the like.

The part 1620 may include one or more boards, and each board may include one or more processors and one or more memories. The processor is configured to: read and execute a program in the memory to implement a baseband processing function and control the apparatus 1600. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

For example, in an implementation, the transceiver unit in the part 1610 is configured to perform receiving-related and sending-related steps performed by the first device in the method embodiments, and the part 1620 is configured to perform processing-related steps performed by the first device in the method embodiments.

For another example, in another implementation, the transceiver unit in the part 1610 is configured to perform receiving-related and sending-related steps performed by the second device in the method embodiments, and the part 1620 is configured to perform processing-related steps performed by the second device in the method embodiments.

It should be understood that FIG. 16 is merely an example rather than a limitation, and the foregoing apparatus 1600 including the transceiver unit and the processing unit may not depend on the structure shown in FIG. 16.

When the apparatus 1600 is a chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides a computer-readable storage medium. The computer-readable storage medium stores computer instructions used to implement the method performed by the first device or the method performed by the second device in the foregoing method embodiments.

For example, when the computer program is executed by a computer, the computer is enabled to implement the method performed by the first device or the method performed by the second device in the foregoing method embodiments.

An embodiment of this application further provides a computer program product including instructions. When the instructions are executed by a computer, the computer is enabled to implement the method performed by the first device or the method performed by the second device in the foregoing method embodiments.

An embodiment of this application further provides a system, where the system includes the first device and one or more second devices in the foregoing embodiments.

An embodiment of this application further provides a vehicle, where the vehicle includes the first device and one or more second devices in the foregoing embodiments.

It may be clearly understood by a person skilled in the art that, for convenience and brief description, for explanations on and beneficial effects of related content in any communication apparatus provided above, refer to the corresponding method embodiments provided above. Details are not described herein again.

In the embodiments of this application, the device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of a method provided in embodiments of this application is not specifically limited in embodiments of this application, provided that a program that records code for the method provided in embodiments of this application can be run to perform communication according to the method provided in the embodiments of this application. For example, the method provided in this embodiment of this application may be performed by a device (for example, a VIU), or a functional module that is in the device and that can invoke and execute a program.

Aspects or features of this application may be implemented as a method, an apparatus, or a product that uses standard programming and/or engineering technologies. The term "product" used in this specification may cover a computer program that can be accessed from any computer-readable component, carrier or medium.

The computer-readable storage medium may be any usable medium accessible by a computer, or a data storage device, such as a server or a data center, integrating one or more usable media. The usable medium (or the computer-readable medium) may include, for example, but is not limited to, various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key drive), or a semiconductor medium (for example, a solid state disk (solid state disk, SSD), a USB flash drive, a read-only memory (read-only memory, ROM), or a random access memory (random access memory, RAM)).

Various storage media described in this specification may indicate one or more devices and/or other machine-readable media that are configured to store information. The term "machine-readable media" may include but is not limited to a radio channel and various other media that can store, include, and/or carry instructions and/or data.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in the embodiments of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should be further noted that the memory described in this specification aims to include but is not limited to these memories and any memory of another proper type.

In the several embodiments provided in this application, it should be understood that the disclosed apparatuses and methods may be implemented in other manners. For example, the foregoing apparatus embodiments are only examples. For example, division into the foregoing units is only logical function division, and may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, or each of the units may exist alone physically, or two or more units are integrated into one unit.

All or some of the foregoing embodiments may be implemented by using software, hardware, firmware, or any combination thereof.

When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a special-purpose computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. A data storage method, comprising:
receiving, through in-vehicle networking of a vehicle, a block that is generated based on data related to the vehicle and that is published by a first device;
performing validity verification on the block published by the first device; and
after the validity verification succeeds, storing the block published by the first device, and updating a locally stored blockchain.

2. The method according to claim 1, wherein the method further comprises:
obtaining a symmetric key, wherein the symmetric key is used to complete block generation and verification.

3. The method according to claim 2, wherein
the symmetric key is a pre-configured symmetric key, or the symmetric key is a symmetric key negotiated with the first device.

4. The method according to any one of claims 1 to 3, wherein the block published by the first device comprises a hash value and a timestamp; and
the performing validity verification on the block published by the first device comprises:
performing the validity verification by comparing a hash value obtained through calculation with the hash value in the block published by the first device.

5. The method according to claim 4, wherein the performing the validity verification by comparing a hash value obtained through calculation with the hash value in the block published by the first device comprises:
when the hash value obtained through calculation is inconsistent with the hash value in the block published by the first device, determining that the validity verification fails, and discarding the block published by the first device.

6. The method according to claim 4, wherein the performing the validity verification by comparing a hash value obtained through calculation with the hash value in the block published by the first device comprises:
before a block is generated or before a block is published, if the block published by the first device is received, and the hash value obtained through calculation is consistent with the hash value in the block published by the first device, determining that the validity verification succeeds, and storing the block published by the first device.

7. The method according to claim 4, wherein the performing the validity verification by comparing a hash value obtained through calculation with the hash value in the block published by the first device comprises:
after a block is published and before the published block is stored, if the block published by the first device is received, the hash value obtained through calculation is consistent with the hash value in the block published by the first device, and the timestamp in the block published by the first device is earlier than a timestamp in the published block, determining that the validity verification succeeds, and storing the block published by the first device.

8. The method according to claim 4, wherein the performing the validity verification by comparing a hash value obtained through calculation with the hash value in the block published by the first device comprises:
after a block is published and before the published block is stored, if the block published by the first device is received, the hash value obtained through calculation is consistent with the hash value in the block published by the first device, and the timestamp in the block published by the first device is later than a timestamp in the published block, determining that the validity verification fails, and discarding the block published by the first device.

9. The method according to any one of claims 4 to 8, wherein the hash value obtained through calculation is obtained through calculation based on one or more of the following:
the timestamp in the block published by the first device, the symmetric key with the first device, a hash value of the last block in the locally stored blockchain, data in the block published by the first device, and an identifier of the first device in the block published by the first device.

10. The method according to any one of claims 1 to 9, wherein the data related to the vehicle comprises data of the vehicle that is collected by an event data recorder.

11. The method according to any one of claims 1 to 10, wherein the first device is a vehicle integrated/integration unit VIU.

12. A data storage method, comprising:
obtaining data related to a vehicle;
generating a block based on the data; and
publishing the block to one or more second devices through in-vehicle networking of the vehicle.

13. The method according to claim 12, wherein the method further comprises:
obtaining a symmetric key, wherein the symmetric key is used to complete block generation and verification.

14. The method according to claim 13, wherein
the symmetric key is a pre-configured symmetric key, or the symmetric key is a symmetric key negotiated with the one or more second devices.

15. The method according to any one of claims 12 to 14, wherein the generating a block based on the data comprises one of the following:
compressing the data, and generating the block based on the compressed data; or
generating the block based on a digest of the data.

16. The method according to any one of claims 12 to 15, wherein the block comprises a hash value and a timestamp.

17. The method according to any one of claims 12 to 16, wherein the obtaining data related to a vehicle comprises:
receiving the data of the vehicle that is collected by an event data recorder.

18. The method according to any one of claims 12 to 17, wherein the second device is a vehicle integrated/integration unit VIU.

19. A data storage method, comprising:
obtaining, by a first device, data related to a vehicle;
generating, by the first device, a block based on the data, and publishing the block to one or more second devices; and
storing, by the one or more second devices, the block, and updating a locally stored blockchain; wherein
the first device communicates with the one or more second devices by using in-vehicle networking of the vehicle.

20. The method according to claim 19, wherein the second device is configured to perform the method according to any one of claims 1 to 11, and/or the first device is configured to perform the method according to any one of claims 12 to 18.

21. A data storage apparatus, comprising a transceiver module and a processing module, wherein
the transceiver module is configured to receive, through in-vehicle networking of a vehicle, a block that is generated based on data related to the vehicle and that is published by a first device;
the processing module is configured to perform validity verification on the block published by the first device; and
the processing module is further configured to: after the validity verification succeeds, store the block published by the first device, and update a locally stored blockchain.

22. The apparatus according to claim 21, wherein the transceiver module is further configured to obtain a symmetric key, wherein the symmetric key is used to complete block generation and verification.

23. The apparatus according to claim 22, wherein
the symmetric key is a pre-configured symmetric key, or the symmetric key is a symmetric key negotiated by the apparatus with the first device.

24. The apparatus according to any one of claims 21 to 23, wherein the block published by the first device comprises a hash value and a timestamp; and
the processing module is specifically configured to:
perform the validity verification by comparing a hash value obtained by the processing module through calculation with the hash value in the block published by the first device.

25. The apparatus according to claim 24, wherein the processing module is specifically configured to:
when the hash value obtained by the processing module through calculation is inconsistent with the hash value in the block published by the first device, determine that the validity verification fails, and discard, by the apparatus, the block published by the first device.

26. The apparatus according to claim 24, wherein the processing module is specifically configured to:
before the apparatus generates a block or before the apparatus publishes a block, if the block published by the first device is received, and the hash value obtained by the processing module through calculation is consistent with the hash value in the block published by the first device, determine, by the processing module, that the validity verification succeeds, and store the block published by the first device.

27. The apparatus according to claim 24, wherein the processing module is specifically configured to:
after the apparatus publishes a block and before the block published by the apparatus is stored, if the block published by the first device is received, the hash value obtained by the processing module through calculation is consistent with the hash value in the block published by the first device, and the timestamp in the block published by the first device is earlier than a timestamp in the block published by the apparatus, determine that the validity verification succeeds, and store, by the apparatus, the block published by the first device.

28. The apparatus according to claim 24, wherein the processing module is specifically configured to:
after the apparatus publishes a block and before the block published by the apparatus is stored, if the block published by the first device is received, the hash value obtained by the processing module through calculation is consistent with the hash value in the block published by the first device, and the timestamp in the block published by the first device is later than a timestamp in the block published by the apparatus, determine that the validity verification fails, and discard, by the apparatus, the block published by the first device.

29. The apparatus according to any one of claims 24 to 28, wherein the hash value obtained by the processing module through calculation is obtained through calculation based on one or more of the following:
the timestamp in the block published by the first device, the symmetric key between the apparatus and the first device, a hash value of the last block in the blockchain locally stored by the apparatus, data in the block published by the first device, and an identifier of the first device in the block published by the first device.

30. The apparatus according to any one of claims 21 to 29, wherein the data related to the vehicle comprises data of the vehicle that is collected by an event data recorder.

31. The apparatus according to any one of claims 21 to 30, wherein the first device or the apparatus or both are vehicle integrated/integration units VIUs.

32. A data storage apparatus, comprising a transceiver module and a processing module, wherein
the transceiver module is configured to obtain data related to a vehicle;
the processing module is configured to generate a block based on the data; and
the transceiver module is further configured to publish the block to one or more second devices through in-vehicle networking of the vehicle.

33. The apparatus according to claim 32, wherein the transceiver module is further configured to obtain a symmetric key, wherein the symmetric key is used to complete block generation and verification.

34. The apparatus according to claim 33, wherein
the symmetric key is a pre-configured symmetric key, or the symmetric key is a symmetric key negotiated by the apparatus with the one or more second devices.

35. The apparatus according to any one of claims 32 to 34, wherein the processing module is specifically configured to:
compress the data, and generate the block based on the compressed data; or
generate the block based on a digest of the data.

36. The apparatus according to any one of claims 32 to 35, wherein the block comprises a hash value and a timestamp.

37. The apparatus according to any one of claims 32 to 36, wherein the transceiver module is specifically configured to receive data of the vehicle that is collected by an event data recorder.

38. The apparatus according to any one of claims 32 to 37, wherein both the apparatus and the second device are vehicle integrated/integration units VIUs.

39. A vehicle, comprising the apparatus according to any one of claims 21 to 31, and/or the apparatus according to any one of claims 32 to 38.

40. A computer-readable storage medium, wherein the computer-readable storage medium stores instructions, and when the computer instructions are run on an apparatus, the apparatus is enabled to perform the method according to any one of claims 1 to 20.

41. A data storage apparatus, comprising:
a memory, configured to store a computer program; and
a processor, configured to read and execute the computer program stored in the memory, wherein when the computer program is executed, the processor performs the method according to any one of claims 1 to 20.

42. A data storage apparatus, comprising:
an interface circuit, configured to input and/or output information; and
a processor, configured to execute a computer program, to enable the apparatus to implement the method according to any one of claims 1 to 20.

43. A computer program product, wherein the computer program product comprises computer program code, and when the computer program code is run on an apparatus, the apparatus is enabled to perform the method according to any one of claims 1 to 20.
